# EUROPEAN PATENT APPLICATION

(11) **EP 2 333 712 A1**
(43) Date of publication of application: **15.06.2011**
(21) Application number: 10190970.3
(22) Date of filing: 12.11.2010
(51) Int. Cl.: G06Q 30/00, G09B 29/00, H04W 4/02

(54) **Method and system for rendering multiple hospitality services to a user via a virtual platform field**

(30) Priority: 17.11.2009 IN CH28172009; 26.04.2010 KR 20100038598
(71) Applicant: SAMSUNG ELECTRONICS CO., LTD., Suwon-si, Gyeonggi-do (KR)
(72) Inventor: Bhatt, Rajen B., Gujarat (IN); Singh, Shailendra, Moradabad UP (IN)
(74) Representative: Bruce, Alexander Richard Henry

(57) **Abstract**

A method and system for rendering multiple hospitality services to a user via a virtual platform are provided. The method includes providing the virtual platform. The virtual platform includes one or more virtual guides in an electronic device. Further, the method includes establishing a connection with a server by the user using the virtual platform to receive the hospitality services via the virtual guides. The method also includes interacting with the user by the virtual guides to receive one or more requests based on the connection and rendering the hospitality services to the user by the virtual guides based on the requests. The system includes an electronic device. The electronic device includes the virtual platform comprising one or more virtual guides to render the hospitality services by interacting with the user. The system also includes a server in communication with the electronic device.

## Description

The present invention relates to the field of hospitality services. More particularly the present disclosure relates to method and system for rendering multiple hospitality services to a user via a virtual platform.

In a scenario when a user of an electronic device desires to navigate through a new location, the user may require assistance from an inhabitant of the new location so that the user can navigate through the new location based on the assistance. The assistance provided by the inhabitant of the new location may not be accurate, and time may be wasted by the user when relying on the assistance of others.

For example, the inhabitant of the new location may not provide complete information of one or more hospitality services available to the user of the electronic device and also the information provided regarding the hospitality services may not always be accurate. The hospitality services include, but are not limited to, local transportation facilities, interesting places around the new location to explore, local shopping information, weather and forecast information. Further, the user of the electronic device may not be able to utilize the time efficiently as a lot of time is consumed in seeking the manual assistance.

If the user requires information associated with the hospitality services in a hotel, then the user needs to seek manual guidance from another user or interact with a person employed with the hotel, which consumes a sufficient amount of time and also the manual guidance provided may not be accurate. Furthermore, if the person employed with the hotel is not available for providing the information, the user may not get the information associated with the hospitality services. In another example, the user may visit a restaurant for a drink and may not be attended to by one or more persons employed with the restaurant. Accordingly, the user may lose interest in one or more services provided by the restaurant since a lot of time is consumed in making an order through the restaurant personnel.

In light of the foregoing discussion there is a need for an efficient technique for rendering multiple hospitality services to a user via a virtual platform.

Embodiments of the present disclosure described herein provide a method and system for rendering multiple hospitality services to a user via a virtual platform.

An example of a method for rendering multiple hospitality services to a user via a virtual platform includes providing the virtual platform. The virtual platform includes one or more virtual guides in an electronic device. Each virtual guide is a multidimensional animated representation of an interactive character. Further, the method includes establishing a connection with a server by the user using the virtual platform to receive the hospitality services via the virtual guides. The method also includes interacting with the user by the virtual guides to receive one or more user requests based on the connection and rendering the hospitality services to the user by the virtual guides based on the user requests.

An example of a system for rendering multiple hospitality services to a user via a virtual platform includes an electronic device. The electronic device includes the virtual platform. The virtual platform includes one or more virtual guides which render the hospitality services by interacting with the user. Further the system includes a server in communication with the electronic device via a network. The server includes a processor which controls the virtual guides to render the hospitality services to the user. Further the server includes a centralized repository which stores data related to at least one of the hospitality services and the user. The server also includes a data conversion unit which converts at least one of speech-to-text and text-to-speech.

The accompanying figures, similar reference numerals may refer to identical or functionally similar elements. These reference numerals are used in the detailed description to illustrate various embodiments and to explain various aspects and advantages of the present disclosure.
FIG. 1 is a block diagram of an environment, in accordance with which various exemplary embodiments can be implemented.
FIG. 2 exemplarily illustrates one or more services rendered by a virtual guide in an electronic device, in accordance with an exemplary embodiment;
FIG. 3 is a block diagram of a server for providing multiple hospitality services to the virtual guide, in accordance with an exemplary embodiment;
FIG. 4 exemplarily illustrates transferring a virtual platform to one or more electronic devices of one or more users, in accordance with an exemplary embodiment;
FIG. 5 is a flow chart illustrating a method for rendering multiple hospitality services via a virtual platform, in accordance with an exemplary embodiment;
FIG. 6 exemplarily illustrates a virtual guide in an electronic device which renders a dining service via a virtual platform, in accordance with an exemplary embodiment;
FIG. 7 exemplarily illustrates a virtual guide in an electronic device which renders a transportation service via a virtual platform, in accordance with an exemplary embodiment;
FIG. 8 exemplarily illustrates a virtual guide in an electronic device which renders places of interest service via a virtual platform, in accordance with an exemplary embodiment;
FIG. 9 exemplarily illustrates a virtual guide in an electronic device which renders emergency and SOS services to a user via a virtual platform, in accordance with an exemplary embodiment.
FIG. 10 exemplarily illustrates interaction of one or more users through virtual guide in an electronic device for rendering one or more services in accordance with an exemplary embodiment.
FIG. 11 exemplarily illustrates a digital television (TV) 1000 in accordance with an exemplary embodiment.

Persons skilled in the art will appreciate that elements in the figures are illustrated for simplicity and clarity and may have not been drawn to scale. For example, the dimensions of some of the elements in the figures may be exaggerated relative to other elements to help to improve understanding of various embodiments of the present disclosure.

It should be observed that method steps and system components have been represented by conventional symbols in the figures, showing only specific details that are relevant for an understanding of the present disclosure. Further, details that may be readily apparent to person ordinarily skilled in the art may not have been disclosed. In the present disclosure, relational terms such as primary and secondary, first and second, and the like, may be used to distinguish one entity from another entity, without necessarily implying any actual relationship or order between such entities.

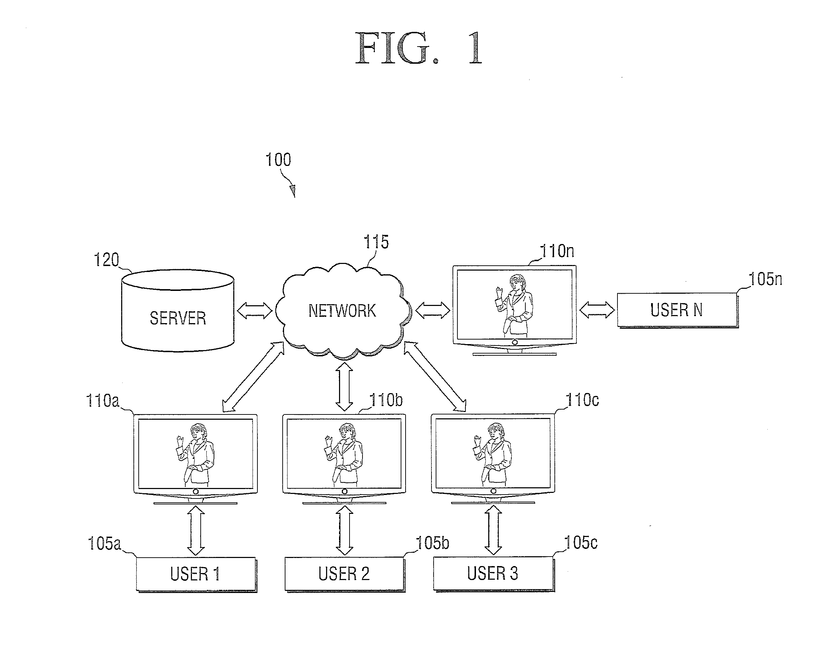

FIG. 1 is a block diagram of an environment 100, in accordance with which various exemplary embodiments can be implemented.

The environment 100 includes one or more users, for example, a user 1 105a, a user 2 105b, a user 3 105c and a user N 105n connected to a server 120 through a network 115. The environment also includes one or more electronic devices, for example, an electronic device 110a, an electronic device 110b, an electronic device 110c and an electronic device 110n in communication with the server 120 through the network. The electronic device 110a includes a virtual platform. The virtual platform includes one or more virtual guides. The virtual guides are used for rendering or providing the hospitality services to the users. As used herein the term "virtual guide" refers to a multidimensional animated representation of a person. The virtual guide is for example, an avatar. In some embodiments, one or more attributes of each of the virtual guides is customized by the users. The attributes includes at least one of appearance, voice, and gesture.

Examples of the electronic device 110a include, but are not limited to, a digital television, a computer, a laptop, a mobile communication device, a hand held device, and a personal digital assistant (PDA). Examples of the network 115 include, but are not limited to, a local area network (LAN), a wide area network (WAN), a wired network, a metropolitan area network (MAN), internet, and a wireless network.

The users establish a connection with the server 120 using the virtual platform in the electronic device 110a. The virtual platform includes one or more virtual guides. The virtual guides interact with one or more users to receive the requests. The virtual guides respond to the requests by rendering the hospitality services to the users. The users interact with the virtual guides via one or more of audio, text and visual communication. For example, a user may request hospitality services using at least one of an audio, a text and visual communication.

In some embodiments, the virtual platform is installed in the electronic device 110a by the users.

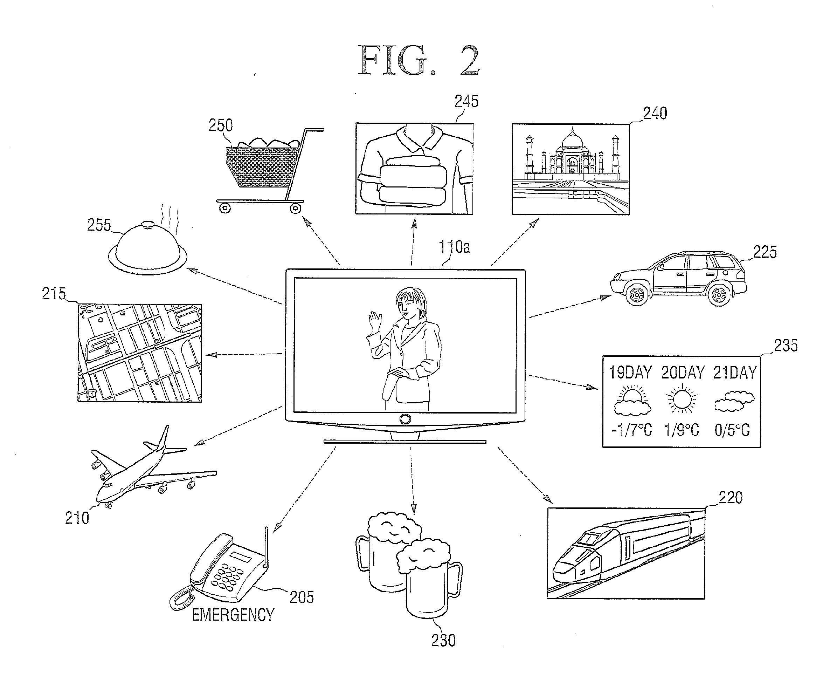

FIG. 2 exemplarily illustrates one or more services rendered by the virtual guide in the electronic device to the user, in accordance with an exemplary embodiment.

The virtual guide in the electronic device 110a renders multiple hospitality services to the users. The users establish a connection with the server using the virtual platform to receive the hospitality services through the virtual guides. The virtual guides interact with the users to receive one or more requests and render the hospitality services to the user based on the requests. The hospitality services rendered by the virtual guides include but are not limited to an emergency service 205 to initiate a call during an emergency situation, one or more travel services, for example, a flight service 210, an inbound map 215 for a particular location, a railways service 220, and a taxi service 225. The hospitality services also include multiple recreation activities 230, a banking service 235, a tourist service 240, a laundry service 245, a shopping service 250, a dining service 255 and a weather location service. In some embodiments, the virtual guide can also render the products available in the shopping malls along with reviews, pricing and purchasing.

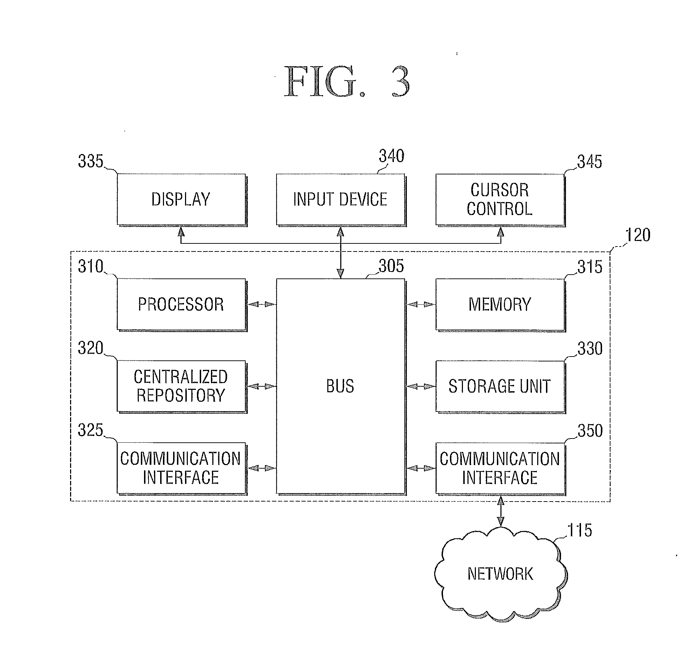

FIG. 3 is a block diagram of a server 120 for providing multiple hospitality services via one or more virtual guides, in accordance with an exemplary embodiment. The server 120 includes a bus 305 for communicating information between components and other devices, and a processor 310 coupled with the bus 305 for controlling the virtual guides to render the hospitality services to a user. The server 120 also includes a memory 315, for example a random access memory (RAM) coupled to the bus 305 for storing information required by the processor 310. The memory 315 may be used for storing temporary information required by the processor 310. The server 120 further includes a centralized repository 320 for storing data related to at least one of the hospitality services and the user (e.g., user information). The server 120 also includes a data conversion unit 325 for converting at least one of speech to text and text to speech. The server also includes a storage unit 330, for example a magnetic disk, hard disk or optical disk, which is coupled to bus 205 for storing information.

The server 120 may be coupled via the bus 305 to a display 335 (e.g., a cathode ray tube (CRT) or liquid crystal display (LCD)), for displaying one or more services. An input device 340, including various keys, is coupled to the bus 305 for communicating information to the processor 310. In some exemplary embodiments, cursor control 345(e.g., a mouse, a trackball, a joystick, or cursor direction keys) for communicating information to the processor 310 and for controlling cursor movement on the display 335 can also be present.

In one embodiment, the steps of the present disclosure are performed by the server 120 using the processor 310. The information can be read into the memory 315 from a machine-readable medium. In alternative exemplary embodiments, hardwired circuitry can be used in place of or in combination with software instructions to implement various exemplary embodiments.

The term machine-readable medium may be defined as a medium providing data to a machine to enable the machine to perform a specific function. The machine-readable medium may be a storage medium. The storage medium may include non-volatile media and volatile media. The storage unit 330 may be a non-volatile storage medium. The memory 315 may be a volatile storage medium. All such media are tangible to enable the instructions carried by the media to be detected by a physical mechanism that reads the instructions into the machine.

Examples of the machine readable medium includes, but are not limited to, a floppy disk, a flexible disk, hard disk, magnetic tape, a CD-ROM, optical disk, punch cards, papertape, a RAM, a PROM, EPROM, and a FLASH-EPROM.

The machine readable medium may also include online links, download links, and installation links providing the information to the processor 210.

The server 120 also includes a communication interface 350 coupled to the bus 305 for enabling data communication. Examples of the communication interface 350 include, but are not limited to, an integrated services digital network (ISDN) card, a modem, a local area network (LAN) card, an infrared port, a Bluetooth port, a zigbee port, and a wireless port.

In some exemplary embodiments, the processor 310 may include one or more processing units for performing one or more functions of the processor 310. The processing units are hardware circuitry which perform specified functions.

In some exemplary embodiments the centralized repository is dynamic in nature. The centralized repository can be updated with information added with reference to new public services, new public facilities, daily updates like weather, temperature, rain forecast, accidents, recent local news, and recent user customized information such as images, videos, reviews and blogs entered.

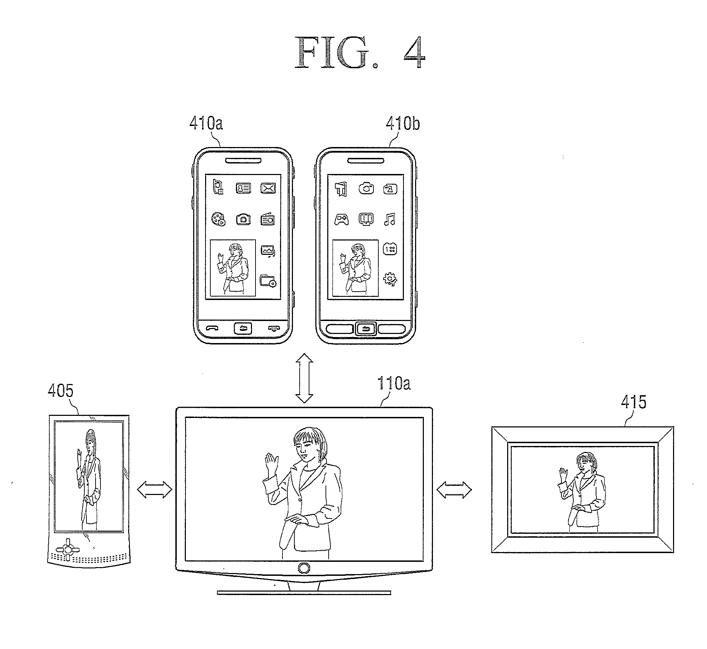

FIG. 4 exemplarily illustrates transferring the virtual platform to one or more electronic devices of one or more users, in accordance with an exemplary embodiment.

The virtual platform can be downloaded to the electronic devices if the users wish to use one or more hospitality services via the virtual platform on the go. The electronic devices include, but are not limited to, one or more of a mobile phone 405, a portable media player 410a and a portable media player 410b and a digital album 415. The hospitality services are related to, but are not limited to, travel, tourism and multiple recreation activities. The hospitality services are available to the users for a time period during which the users stay in the particular location. Once downloaded on the electronic devices, one or more virtual guides in the virtual platform interact with a centralized repository on a server of, for example, a hotel. The server maintains data associated with the users including, but not limited to, personalized user information, user reviews, audio-visual content associated with the users, and other logs, in the centralized repository. In some exemplary embodiments, the virtual platform stays activated only for the duration of the user's stay in the hotel. Once a user checks out the hotel, the virtual platform may be deactivated and uninstalled automatically. Before deactivation, all the hospitality services used by the user and any data associated with the users during the period of obtaining hospitality services will be transferred to an internal database of the hotel for future usage. Downloading of the virtual platform on the electronic devices can be done using one or more of USB, LAN connectivity, or other transfer protocols. Downloading of the virtual platform on the electronic devices in addition to providing the hospitality services also serves other various purposes including, but not limited to, reproducing songs and images corresponding to the tourism place as a slide show.

In some exemplary embodiments, the virtual guides can speak customized sentences for example, "Welcome Mr. John to Hotel X", "My Name is LOBO and I am your Guide in this Hotel X and City A", "Good Night and Sweet Dreams", "Good Morning", "Good Afternoon" and "I hope you have a pleasant stay in this hotel". One or more portions within the customized sentences are customizable and taken from the data associated with the users in the centralized repository of the server. The portions include, for example, name, and time of the day, and a specific message related to a specific occasion. The data associated with the users includes, but is not limited to, hotel information, city information, name, languages known, and one or more preferences. Additionally, virtual guides may speak text-based information stored in the centralized server related to the hospitality services including, but not limited, dining services, bar and restaurant services, laundry services, local travel information and places to explore, taxi service, car rentals, local shopping information, weather forecast, local maps and routes, intercity journey information by flight, rail or other surface services, and room services. The virtual guides may render the text based information to the users in the form of speech by using a text-to-speech conversion interface in the electronic devices housing the virtual platform. In some exemplary embodiments, the virtual guides may accept speech commands from the users by means of a speech-to-text conversion interface in the electronic devices housing the virtual platform. In some exemplary embodiments, the virtual platform includes a conversion unit for performing at least one of speech-to-text conversion and text-to-speech conversion.

In some exemplary embodiments, the virtual guides may navigate one or more virtual spaces by means of multidimensional graphics. The virtual spaces include, but not limited to a multidimensional graphical representation of hotel kitchens, places of interest, shopping malls, bars, restaurants and places connected with the hotel by means of business-to-business collaboration. The virtual spaces can include places for which galleries and maps are available in the centralized repository of the servers.

In some exemplary embodiments, the virtual guides may show the users one or more real products available in one or more shopping malls along with product reviews, pricing and purchasing information, pictures of the various food preparations along with reviews and ordering information, real time three dimensional (3D) tours of various places of interest, top views, bottom views, side views, 3D galleries, real interiors of cabs to hire along with the ability to interact with a chauffeur of the cabs. Also, the virtual platform may enable the users to take a virtual tour and route over the city routes and show the real-time pathways to the places of interest. Further, the virtual platform may provide different types of information to the users, for example, information on a weather forecast, information on placing a request for a local tour, and emergency information in case of fire, flood, and terror attacks. The virtual guide may show guests and take them to the pathways of various hotel locations, rooms, and emergency exit pathways as a 3D tour.

In some exemplary embodiments, the virtual platform is connected to one or more emergency service sensors (e.g., fire, flood, and terror attacks sensors). During the course of an emergency the virtual platform may alert the users by one or more of playing a siren, showing the users a pathway from a current location to an emergency exit by providing maps and visual aids. Also, the virtual guides can make automatic calls to police or other local help services by connecting to one or more telephonic services and mail services. In some exemplary embodiments, the virtual platform maintains list of doctors available on call. In these exemplary embodiments, based on the voice command received from the users, the virtual guides can contact one or more doctors in the list by making automatic calls.

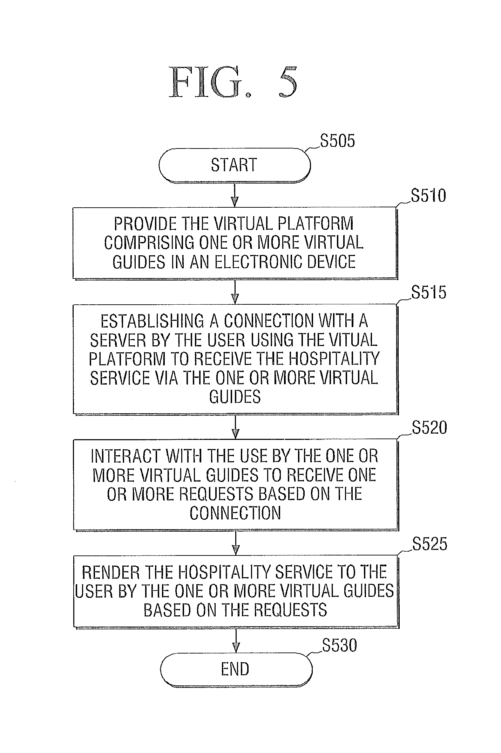

FIG. 5 is a flow chart illustrating a method for rendering multiple hospitality services to a user via a virtual platform, in accordance with an exemplary embodiment.

The method starts at step 505.

At step 510, the virtual platform comprising one or more virtual guides is provided in an electronic device. Examples of the electronic device include, but are not limited to, a digital television, a computer, a laptop, a mobile communication device, a hand held device, and a personal digital assistant (PDA). In some exemplary embodiments, the user downloads the virtual platform into the electronic device.

At step 515, a connection is established with a server by the user using the virtual platform to receive the hospitality services via the virtual guides. In one exemplary embodiment, the connection is established with the server by the user using the virtual platform by installing the virtual guide in the electronic device manually. The hospitality services include but are not limited to travel, tourism and a plurality of recreation activities. In another exemplary embodiment, the virtual guide is downloaded on the electronic device by means of Universal Serial Bus (USB), Local Area Network (LAN) connectivity, or other transfer protocols.

One or more preferences may be provided for the hospitality services by the user. A particular hospitality service is selected from the hospitality services based on the preference of the users.

At step 520, the virtual guides interact with the user to receive one or more requests based on the connection. The interaction is performed using one or more of a voice, text and visual communication. The visual communications include, but are not limited to gestures. The virtual guide interacts by receiving the request for a particular service from the hospitality services rendered to the users through the virtual guide in an electronic device. The requests include, but are not limited to, at least one of a text request, an audio request and a visual request.

The user is permitted to explore at least one virtual space and one or more virtual objects in the virtual space. Exploring the virtual space includes, for example, taking a virtual tour of a graphical representation of a real space or taking a visual tour of a multidimensional view of the real space. The real space includes, but is not limited to, a hotel, a shopping mall, and any existing location. The virtual objects include, but are not limited to, graphical representations of one or more objects in the real space represented by the virtual space, and real time images of the objects in the real space represented by the virtual space.

A recommendation of one or more of the hospitality services is generated by the electronic device to the user based on data of the user in a centralized repository on the server. The users may communicate with each other through the virtual guide and may also recommend a particular service from the hospitality services to each other. The recommendation of the particular service is done based on the data stored in the centralized repository on the server. The data includes information associated with the particular service used previously by the users.

The recommendations are provided to the user by the virtual guides. The virtual guides in an electronic device render the recommendations to the users.

The virtual guides communicate with the user via one or more of audio, text and visual communication. In some exemplary embodiments, one or more attributes of each of the virtual guides is customized by the user. The attributes includes at least one of appearance, voice, and gesture.

The user communicates with the virtual guides via one or more of audio, text and visual communication. The user requests the virtual guides for one or more of the hospitality services through at least one of an audio, a text and visual communication.

A connection is established with a third party database by the virtual guides. The third party database includes, but is not limited to, databases associated with one or more services(e.g., telephonic services, mail services and railway reservation services), an internal database of an organization (e.g., a shopping mall, a hotel, a museum), and an online database(e.g., a telephone directory). The virtual guides in the electronic device may establish the connection with the third database to extract data required to provide the hospitality services to the users. Consider for example, in the event of an emergency, if the user requires a doctor, the user requests the virtual platform to call the doctor suitable for the emergency. The virtual platform can establish a connection with an online telephone directory and search for a suitable doctor based on data associated with the user saved in the centralized repository of the server. Upon finding a suitable match in the online telephone directory, the virtual platform can automatically call the doctor and connect the user to the doctor.

At step 525, the hospitality services are rendered to the user by the virtual guides based on the requests. The requests include at least one of a text request, an audio request and a visual request.

An interaction is permitted among the virtual guides for one or more users. The virtual guides associated with one of the users may interact with other virtual guides associated with other users. Further, at least one of the users, one or more objects associated with the user, and an environment of the user is monitored by one of the virtual guides and the server. The monitoring of the users is performed by one of the virtual guides and the server based on the data of the user stored in the centralized repository of the server.

The alerts are provided to the user by at least one of the server and the virtual guides based on the monitoring. The alerts include but are not limited to visual alerts and audible alerts.

The method stops at step 530.

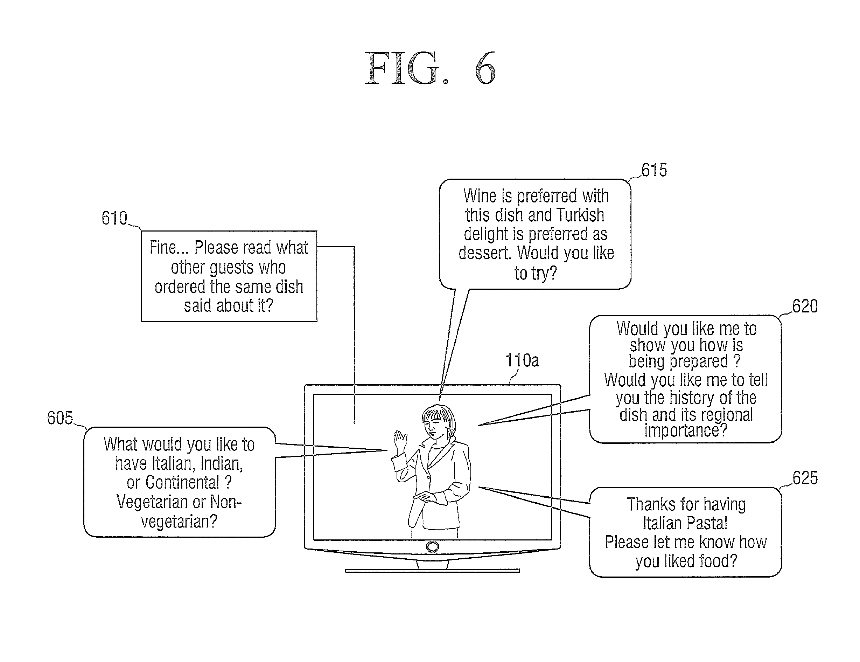

FIG. 6 exemplarily illustrates a virtual guide in an electronic device for rendering a dining service to a user via a virtual platform, in accordance with an exemplary embodiment.

Consider an example in which a user 105a wishes to know about the dining services available in a hotel. The user 105a interacts with the electronic device 110a present within the location of the hotel through a virtual platform. The virtual platform is provided in an electronic device 110a which includes one or more virtual guides.

The user 105a begins the interaction by requesting the virtual guide in the electronic device 115a to provide information of dining services available at the hotel. The virtual guide receives the request and responds through at least one of appearance, voice, and gesture by rendering the various types of dishes available in the hotel. As an example, the virtual guide responds to the user 105a requests by asking the user "What would you like to have Italian, Indian, or Continental? Vegetarian or Non-vegetarian?", as illustrated in 605.

Further, the user 105a receives the information from the virtual guide and requests the virtual guide to provide information that other users have mentioned about a particular dish as illustrated in 610. The virtual guide renders information of various dishes that are preferred with the particular dish, for example, "Wine is preferred with this dish and Turkish delight is preferred as dessert. Would you like to try?", as illustrated in 615. The virtual guide also renders information regarding the preparation, history and the regional importance of the particular dish, for example, "Would you like me to show you how it is being prepared? Would you like me to tell you the history of the dish and its regional importance?", as illustrated in 620 to the user.

The user 105a responds to the information by placing an order of a particular dish. The virtual guide displays multidimensional images of the particular dish to the user 105a. After the user 105a completes having the dish the virtual guide expresses its regards through the interactive voice and a gesture-based animation to provide an opinion about the particular dish, for example, "Thanks for having Italian Pasta! Please let me know how you liked the food?", as illustrated in 625.

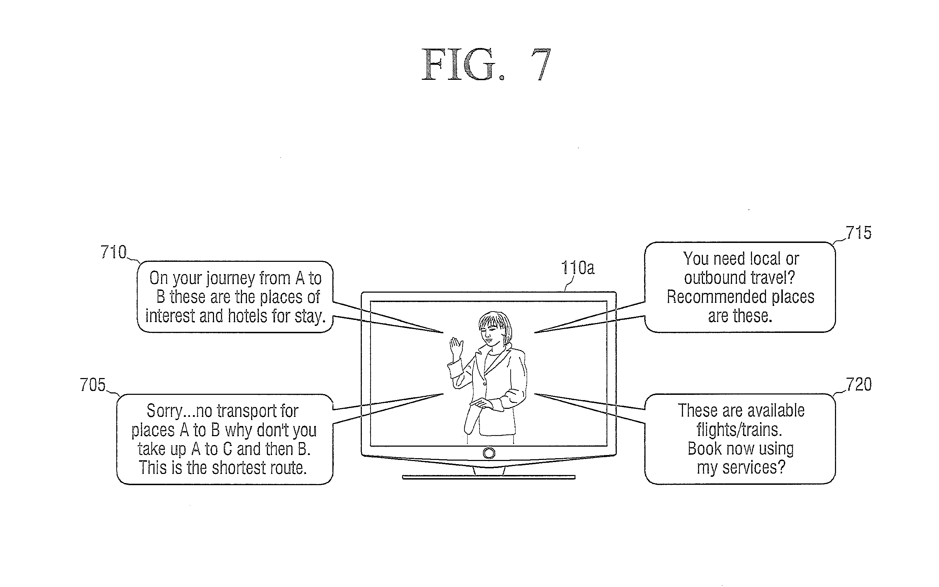

FIG. 7 exemplarily illustrates a virtual guide in an electronic device rendering a transportation service to a user via a virtual platform, in accordance with an exemplary embodiment.

Consider an example in which a user 105a wishes to know about the transportation services available at a hotel. The user 105a interacts with the electronic device 110a present within the location of the hotel through a virtual platform. The virtual platform is provided in an electronic device 110a which includes one or more virtual guides.

The user 105a begins the interaction by requesting the virtual guide in the electronic device 110a to provide information of local and outbound travel available at the hotel. The virtual guide receives the request and responds through at least one of appearance, voice, and gesture by rendering the various traveling options available at the hotel. The virtual guide responds to the user 105a requests, for example, "Sorry...no transport for places A to B why don't you take up A to C and then B. This is the shortest route", as illustrated in 705.

Further, the user 105a receives the information from the virtual guide and requests the virtual guide to provide information about any accommodation facilities that are available on the travel. The virtual guide renders information of various accommodation facilities available, for example, "On your journey from A to B these are the places of interest and hotels for stay", as illustrated in 710. The virtual guide also renders information regarding any famous places to visit during the user's travel and this could also be based on the database of his previous visits. The central repository 320 also includes a world map which provides assistance that can direct the user 105a using a visual route. For example, "You need local or outbound travel? Recommended places are these", as illustrated in 715 to the user 105a.

The user 105a responds to the information by placing a request for the availability of tickets in one of the travel services recommended by the virtual guide. The user 105a can also book the tickets for his travel by interacting with the virtual guide. The booking of tickets is executed by the server 120 by means of a business to business collaboration with the local transport department. The virtual guide provides an interface to book the seats and pay for the tickets by means of connecting to online payment gateways, for example, "These are available flights/trains. Book now using my services?" as illustrated in 720.

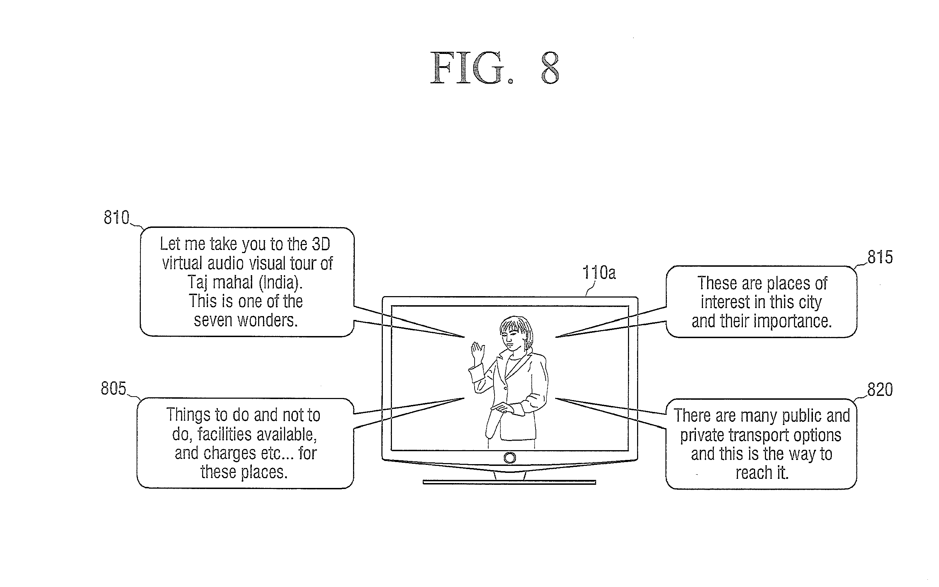

FIG. 8 exemplarily illustrates a virtual guide in an electronic device rendering a places of interest service to a user via a virtual platform, in accordance with an exemplary embodiment.

Consider an example in which a user 105a wishes to know about the information regarding the places to visit which are located in and around a hotel. The user 105a interacts with the electronic device 110a present within the location of the hotel through a virtual platform. The virtual platform is provided in an electronic device 110a which includes one or more virtual guides.

The user 105a begins the interaction by requesting the virtual guide in the electronic device 110a to provide information regarding the places to see in a city or those located around a hotel. The virtual guide receives the request and responds through at least one of appearance, voice, and gesture by rendering the places to see in the city or located around the hotel. The virtual guide responds to the user 105a requests, for example, "Things to do and not to do, facilities available, and charges etc... for these places.", as illustrated in 805.

Further, the user 105a receives the information from the virtual guide and requests the virtual guide to provide information about particular places. The virtual guide replies back to the user 105a, for example, "Let me take you to the 3D virtual audio visual tour of Taj Mahal (India). This is one of the seven wonders", as illustrated in 810. Accordingly, the user may be taken through a three dimensional video stored in the central repository 320 by replying back. The virtual guide also renders additional information on the place selected by the user, for example, "These are places of interest in this city and their importance", as illustrated in 815. If the user 105a is satisfied with the place, the user 105a may further continue by requesting the virtual guide about the feasible transport facilities for the selected place. Further the virtual guide responds by rendering the information about the travel options available, for example, "There are many public and private transport options and this is the way to reach it", as illustrated in 820. The virtual guide also eliminates the need for a tourist guide as it delivers the voice information regarding the places. Further, the virtual guide automatically asks the user 105a to provide a review of the place explored by the user in the system either as a text message or as audio-visual information.

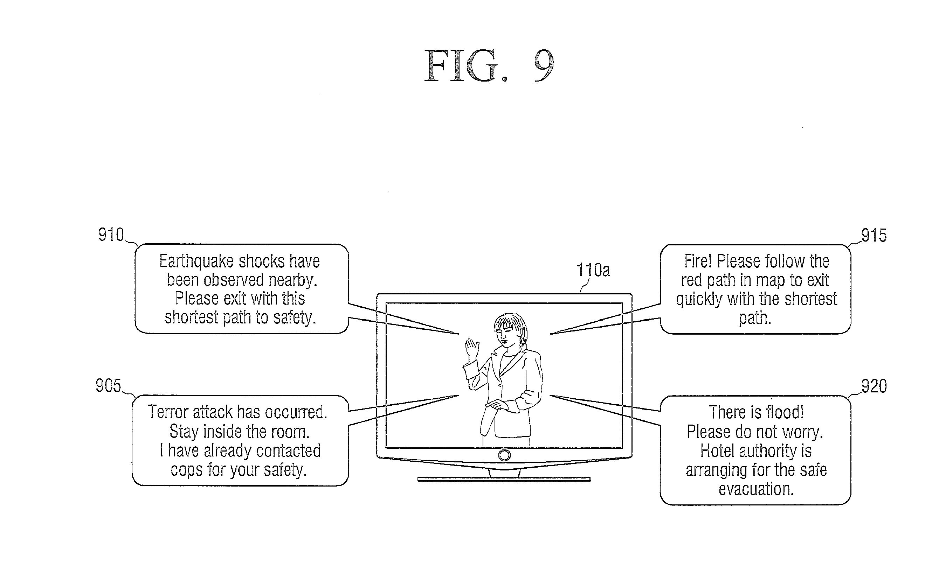

FIG. 9 exemplarily illustrates a virtual guide in an electronic device rendering emergency and Save Our Souls (SOS) services to a user via a virtual platform, in accordance with an exemplary embodiment.

Consider an example in which a user 105a is rendered the emergency and SOS services available at a hotel. The user 105a interacts with an electronic device 110a present within the location of the hotel through a virtual platform. The virtual platform is provided in an electronic device 110a which includes one or more virtual guides.

In some exemplary embodiments, the server monitors the user based on a predetermined data. The server or the virtual platform monitors either the user, one or more objects associated with the user, an environment of the user, or any combination thereof. Monitoring the user includes, but is not limited to, monitoring user behavior, monitoring user preferences, and monitoring user practices over a period of time. In some exemplary embodiments the virtual platform creates default settings for each of the users based on the monitoring. The virtual platform generates recommendations for the hospitality services based on the created default settings. For example, if the users provide a particular preference every time, the next time the users request a hospitality service, the virtual platform provides a recommendation to the users based on the particular preference. The created default settings for each of the users are saved in the centralized repository 320 along with the data associated with the corresponding users.

The virtual guide provides one or more alerts to the user based on the monitoring. The alerts include, but are not limited to, a visual alerts and audible alerts. The audible alerts include, for example, SOS calls. The alerts are, for example, "Terror attack has occurred. Stay inside the room. I have already contacted cops for your safety", as illustrated in 905 indicating an emergency situation in the hotel to the users and also guiding the users to take precautions.

The virtual guide provides information regarding a safe exit in the emergency situation such as earthquakes by directing the users to exit from the hotel in a particular direction, for example, "Earthquake shocks have been observed nearby. Please exit with this shortest path to safety.", as illustrated in 910.

The virtual guide renders information regarding a safe exit in the emergency situation such as a fire in the hotel premises by directing the users to exit from the hotel in a particular direction, for example, "Fire! Please follow the red path in map to exit quickly with the shortest path.", as illustrated in 915.

The virtual guide also renders information regarding the flood that as occurred at the hotel premises by requesting the users to not panic as the hotel authority has taken enough measures for safe evacuation of the users. For example, "There is flood! Please do not worry. Hotel authority is arranging for the safe evacuation.", as illustrated in 920.

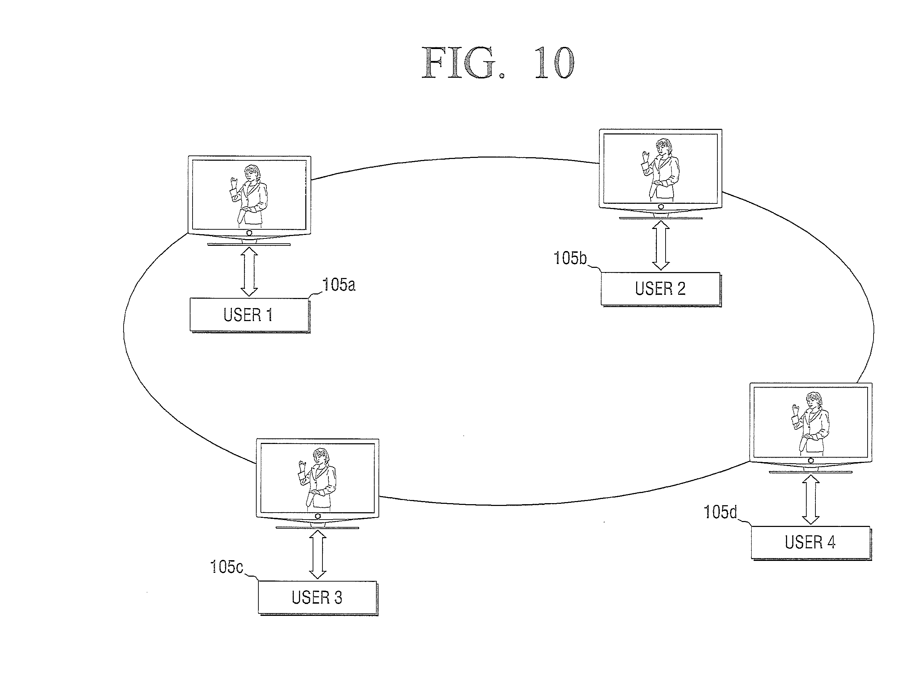

FIG. 10 exemplarily illustrates interaction of one or more users through virtual guide in an electronic device for rendering one or more services in accordance with an exemplary embodiment.

The users, for example, a user 105a, a user 105b, a user 105c, and a user 105d can interact with each other through the virtual guides in the electronic device 110a. Consider an example in which a user 105a in the hotel is interacting with one or more users through the virtual guide. The virtual guides are supported by the server 120 to render the information to the users.

The virtual guide also maintains a log of various services that need to be rendered to one or more users. The information regarding the services rendered to the users are stored in the server 120. The server 120 creates a pool of the information and can be accessed by other users via the virtual guides.

Whenever the users seek the hospitality services, the virtual guides connect the users with other users through the virtual guides of the other users by using the pool information. For example, the virtual guides can connect Mr. A with Mr. B if on finding that Mr. A has ordered American corn and Mr. B wants to order same item and Mr. B can essentially seek the opinion of Mr. A about the dish. The virtual guides can connect Mr. A with Mr. B on finding that Mr. A wants to visit Niagara falls and Mr. B visited the same recently (e.g., a day before). The virtual guides can group one or more users planning to visit a church if the virtual platform finds that in the past few hours of time one or more users have inquired about the church and the users might plan to visit the church. Also, the virtual platform can suggest a best place to roam around to a user by identifying the specific reviews entered by other users.

In one exemplary embodiment, the users can initiate audio-visual chatting through virtual guide. The user can also create group parties, picnics, and entertainment zones through virtual guides.

In another exemplary embodiment, the social network and allied services can also be activated and rendered to the users when the users download the virtual guide service on the electronic devices.

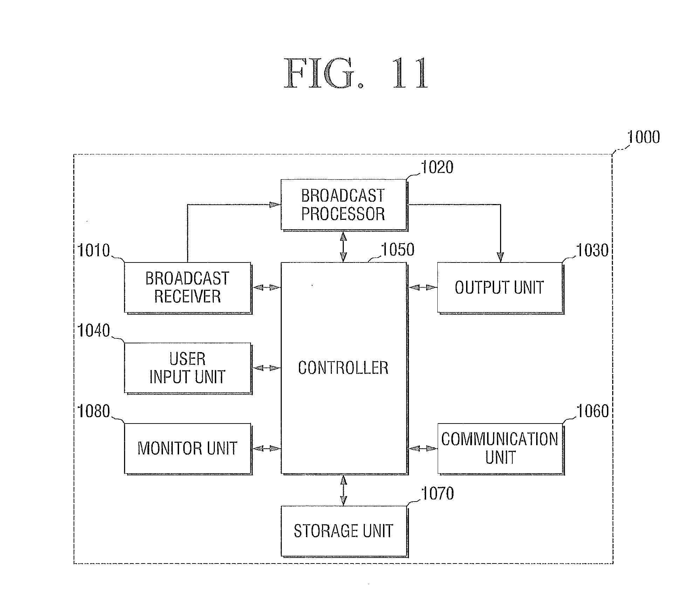

FIG. 11 is a block diagram illustrating a digital television (TV) 1000 according to an exemplary embodiment.

The digital TV 1000 includes a broadcast receiver 1010, a broadcast processor 1020, an output unit 1030, a user input unit 1040, a controller 1050, a communication unit 1060, a storage unit 1070, and a monitor unit 1080.

The broadcast receiver 1010 receives a broadcast by wire or wirelessly and provides the received broadcast to the broadcast processor 1020. The broadcast processor 1020 decodes the received broadcast to divide it into an audio signal and a video signal, and converts the audio signal and the video signal into signals of formats suitable for the output of the output unit 1030. The broadcast processor 1020 provides the signal-processed audio signal and video signal to the output unit 1030.

The user input unit 1040 receives a service request from a user. The user input unit 1040 transmits a signal received from the user to the controller 1050. In FIG. 11, the digital TV 1000 includes the user input unit 1040, but this should not be considered as limiting. The user input 1040 may be a remote controller (not shown) connected to the digital TV 1000 wirelessly or a mouse (not shown) for receiving the audio signal.

The controller 1050 controls the broadcast processor 1020 to process the broadcast received by the broadcast receiver 1010.

The controller 1050 controls the output unit 1030, the communication unit 1060, the storage unit 1070, and the monitor unit 1080 to render hospitality services based on the request received from the user through the user input unit 1040.

The controller 1050 controls the output unit 1030 to provide text, audio, or video to the user, and also controls the communication unit 1060 to access a third party database. Also, the controller 1050 performs control operations for providing the hospitality services based not only on the request received from the user through the user input unit 1040, but also data of the user stored in the storage unit 1070. Also, the controller 1050 controls the monitor unit 1080 to monitor one or more objects associated with the user and an environment of the user.

The output unit 1030 outputs the video or audio signal to render the hospitality services to the user.

The communication unit 1060 provides an environment enabling communication with an external apparatus. In other words, the communication unit 1060 accesses the third party database or communicates with the external apparatus to exchange data in order to render the hospitality services to the user.

The storage unit 1070 stores diverse data for rendering the hospitality services. The storage unit 1070 stores the hospitality services to be rendered in response to the request from the user and also stores information regarding the user. Also, the storage unit 1070 stores a service requested by the user or a service which has been rendered to the user, so that the service can be referred to when the user requests the service afterward.

The monitor unit 1080 monitors one or more objects associated with the user and the environment of the user. For example, the monitor unit 1080 monitors whether an emergency issue arises or not in the place where the user exists or monitors the facilities used by the user.

In the preceding specification, the present disclosure and its advantages have been described with reference to specific embodiments. However, it will be apparent to a person of ordinary skill in the art that various modifications and changes can be made, without departing from the scope of the present disclosure, as set forth in the claims below. Accordingly, the specification and figures are to be regarded as illustrative examples of the present disclosure, rather than in a restrictive sense. All such possible modifications are intended to be included within the scope of present disclosure.

## Claims

1. A method for rendering a plurality of hospitality services to a user via a virtual platform, the method comprising:
providing the virtual platform comprising one or more virtual guides in an electronic device;
establishing a connection with a server by the user using the virtual platform to receive the hospitality services via the one or more virtual guides;
interacting with the user by the one or more virtual guides to receive one or more requests based on the connection; and
rendering the hospitality services to the user by the one or more virtual guides based on the requests.

2. The method of claim 1, further comprising monitoring at least one of the user, one or more objects associated with the user, and an environment of the user, by one of the one or more virtual guides and the server.

3. The method of claim 2, wherein the monitoring is performed using a data of the user stored in a centralized repository on the server.

4. The method of claim 2 or 3, further comprising:
providing one or more alerts to the user by at least one of the server and the one or more virtual guides based on the monitoring, wherein the one or more alerts comprise at least one of visual alerts and audible alerts.

5. The method of claims 1 to 4, wherein interacting comprises:
allowing the user to explore at least one of a virtual space and one or more virtual objects in the virtual space.

6. The method of claims 1 to 5, wherein one or more attributes of each of the one or more virtual guides is customized by the user.

7. The method of claim 6, wherein the attributes comprise at least one of appearance, voice, and gesture.

8. The method of claims 1 to 7, wherein each of the requests comprises at least one of a text request, an audio request, and a visual request.

9. The method of claims 1 to 8, wherein establishing the connection with the server comprises:
providing one or more preferences for the hospitality services by the user.

10. The method of claims 1 to 9, further comprising:
allowing interaction among the one or more virtual guides for one or more users.

11. The method of claims 1 to 10, wherein interacting comprises:
generating a recommendation of one or more of the hospitality services to the user based on data of the user stored in a centralized repository of the server; and
providing the recommendation to the user by the one or more virtual guides.

12. The method of claims 1 to 11, wherein interacting comprises:
establishing a connection with a third party database by the one or more virtual guides.

13. An electronic device which comprises a virtual platform comprising one or more virtual guides, the electronic device comprising:
a user input unit for receiving one or more requests for a plurality of hospitality services from a user via the one or more virtual guides;
a monitor unit for monitoring one or more objects associated with the user and an environment of the user; and
a controller for rendering the hospitality services to the user based on the requests input from the user, the one or more objects associated with the user and the environment of the user.

14. The electronic device of claim 13, further comprising:
a storage unit for storing the hospitality services corresponding to the requests from the user and data of the user,
wherein the monitor unit performs the monitoring using the data of the user stored in the storage unit.

15. The electronic device of claim 14, wherein the controller provides one or more alerts to the user based on the one or more objects associated with the user and the environment of the user,
wherein the one or more alerts comprise at least one of visual alerts and audible alerts.
